# EUROPÄISCHE PATENTSCHRIFT

(11) **EP 2 154 514 B1**
(45) Veröffentlichungstag und Bekanntmachung des Hinweises auf die Patenterteilung: **23.04.2014**
(21) Anmeldenummer: 09010304.5
(22) Anmeldetag: 10.08.2009
(51) Int. Cl.: G01N 21/64

(54) **Vorrichtung und Verfahren zur Konzentrationsanalyse des Inhalts von medikamentgefüllten Glasbehältern**
Method and device for concentration analysis of the content of medicine-filled glass containers
Dispositif et procédé d'analyse de la concentration du contenu de récipients en verre remplis de médicament

(30) Priorität: 14.08.2008 DE 102008037713
(43) Veröffentlichungstag der Anmeldung: 17.02.2010
(73) Patentinhaber: Seidenader Maschinenbau GmbH, 85570 Markt Schwaben (DE)
(72) Erfinder: Ziegler, Kurt Erik, 24937 Flensburg (DE); Bublitz, Jens, 23684 Scharbeutz (DE)
(74) Vertreter: Laufhütte, Dieter

(56) Entgegenhaltungen:
- EP-A1- 1 089 068
- DE-A1- 19 507 119
- DE-U1-202007 001 444
- US-A- 5 216 483
- US-A1- 2007 187 617

## Beschreibung

Die Erfindung betrifft ein Verfahren zur Konzentrationsanalyse des Inhalts von medikamentgefüllten Glasbehältern, nach dem Oberbegriff des Hauptanspruches sowie eine Vorrichtung zur Konzentrationsanalyse des Inhalts von medikamentgefüllten Glasbehältern, insbesondere für sedimentierende Lösungen.

Es ist bekannt, dass in der Insulintherapie eine Vielzahl von unterschiedlichen Konzentrationen des Medikaments für die Benutzung durch den Patienten, bereits abgabegerecht abgepackt dem Patienten an die Hand gegeben werden, damit dieser sich, seinen wechselnden Bedürfnissen gemäß, eine stets richtige Dosierung für einen durchaus von Fall zu Fall anderen Wirkzeitraum selbst verabreichen kann. Für diesen Zweck werden die Präparate in Zylinderampullen, sogenannte Karpulen, zum Einmalgebrauch in den zugehörigen Karpulenspritzen abgefüllt. Für die Insulintherapie in Arztpraxen oder Kliniken werden auch größere Mengen in entsprechenden zylindrischen Glasbehältern abgefüllt.
Dabei werden hochkomplexe Präparate verwendet, bei denen durch gentechnologische Methoden einzelne von insgesamt 51 vorhandenen Aminosäuren ausgetauscht werden und diese damit ein gegenüber dem körpereigenen Insulin verändertes Wirkungsprofil aufweisen. Durch die Zugabe weiterer Stoffe, wie zum Beispiel Cresol oder Zinkoxid, werden die Eigenschaften der unterschiedlichen Präparate zusätzlich beeinflusst.

Lispro (Humalog®) zum Beispiel, zeichnet sich durch einen rascheren Eintritt in eine entsprechend kürzere Dauer der Wirkung im menschlichen Körper aus. Zink- oder NPH-Insuline hingegen zeigen eine deutliche Verzögerung in der Wirkdauer. Dieses wird im wesentlichen durch eine Aggregatbildung der einzelnen Insulinmoleküle hervorgerufen, die sich in Form einer sedimentierten Suspension im Gegensatz zu den "klaren" Insulinen wiederspiegelt.

Bei der Verarbeitung, insbesondere der Abfüllung dieser Insulinart und daraus abgeleiteter Mischinsuline, muss daher zur exakten Konzentrationsbestimmung der Anteil an Sedimenten stets berücksichtigt werden. Das heißt aber, dass eine Analyse in Echtzeit in jeder produzierten Einheit erfolgen muss, da eine stichprobenartige Prüfung nicht ausreicht. Sollte es nämlich bei einer Stichprobe bereits, zum Beispiel aufgrund von Adsorptionsund Entmischungsprozessen der Sedimente, beim Abfüllen zu Schwankungen gekommen sein, kann die Freigabe einer großen Anzahl von abgefüllten Produkten (der Teilcharge seit der letzten Analyse) nicht gewährt werden.

Hauptzielsetzung des Verfahrens ist es daher, die Konzentration von Insulinpräparaten unter Berücksichtigung des Sedimentationsgrades, zerstörungsfrei und nicht invasiv, zudem aber schnell, direkt im Abfüllungsprozess, in jedem Behältnis in Echtzeit zu analysieren.

Bei der Insulinherstellung werden häufig Stoffansätze von der Herstellern zunächst gefriergetrocknet gelagert oder zu anderen Abfüllbetrieben versandt, bevor dann eine Aufarbeitung und die Abfüllung durchgeführt wird. Bei diesen Bearbeitungsprozessen kann es, zum Beispiel aufgrund von Fehldosierungen, zu Abweichungen von der vorgesehenen Rezeptur kommen. Eine weitere Zielsetzung des Verfahrens ist daher eine generelle Identifikation einer ordnungsgemäßen Produktcharge unter definierten Bedingungen, vor der Abfüllung des jeweiligen Insulinpräparates oder bei der Verpackung bereits gefüllter Glasbehälter.

Im Stand der Technik werden neben der Produktinspektion auf Beschädigungen, zum Beispiel durch Risse, auf Vorhandensein von Fremdpartikeln, des Füllstandes, des ordnungsgemäßen Verschlusses oder der richtigen Etikettierung von Glasgefäßen bereits im Wesentlichen die folgenden zwei Verfahren zur Prüfung des Inhalts der Gefäße verwandt: zum einen das in der Veröffentlichung DE 103 26 152 A1 beschriebene Verfahren, bei dem auf Basis einer Nahinfrarot (NIR)-spektroskopie eine Konzentrationsbestimmung, unter anderem von Insulin in Ampullen, erfolgen soll.

Nachteilig bei diesem Verfahren erscheint, dass das Grundprinzip der Absorptions- oder Transmissionsmessung, bei der die jeweilige Probe durchstrahlt werden muss, eine genaue Positionierung der gegenüberliegenden Strahlungsquelle und des Detektors notwendig macht. Die ist bei einer Onlinemessung während des Produktionszyklus schwierig zu gewährleisten, da Lageänderungen der Ampullen in ihren Ständern beim Anlaufen der Anlage ohne weiteres möglich sind. Durch die runde Form der Ampullen ist jedoch stets eine genaue Zentrierung der Messung auf die dickste Stelle notwendig, da allein durch die optischen Beugungseffekte ansonsten wesentliche Verfälschungen der erfassten Strahlungsmenge zu befürchten sind.

Das bisher bekannte Verfahren kann daher keine nur lose gehalterten Objekte im Produktionsprozess messen, sondern muss stets unbewegte, einheitlich und reproduzierbar gelagerte Objekte präsentiert bekommen. Dies ist apparativ sehr aufwendig.

Weiter führt die bei den Verzögerungsinsulinen durch die Komplexbildung inhärente Sedimentierung zu einer nahezu vollständigen Abschwächung des eingestrahlten Lichtes, so dass die Anwendung bei diesen Präparaten im Bereich der Sedimentation gar nicht mehr möglich ist.

Weiter ist die unterschiedliche Rückstreuung aufgrund der nicht immer homogenen Verteilung der Sedimente in der Karpule sehr ungenau.

Reflektionen der Strahlung an der zylindrischen Geometrie der Ampulle oder anderer Glasbehälter führen zu zusätzlichen Verfälschungen im Messergebnis, wobei schließlich die Notwendigkeit des Einsatzes eines Spektrometers zur wellenlängenselektiven Erfassung der transmittierten Strahlung und der damit verbundenen chemometrischen Auswertung der jeweils registrierten Spektren, durch die starke Absorption des als Träger verwendeten Wassers zusätzlich einen Störfaktor aufweist.

In dem Gebrauchsmuster DE 20 200 001 444 U1 ist ein zweites, dem bereits dargestellten, auf dem Prinzip der Durchstrahlung der mit Insulin gefüllten Behältnisse basierendes, ähnliches Verfahren gezeigt. Die Detektion erfolgt hier nicht spektral aufgelöst, sondern in einem festen Wellenlängenbereich mit einem fotometrischen Mehrpunktdetektor an verschiedenen, räumlich getrennten Positionen. Nachteilig an diesem Verfahren ist, dass das Grundprinzip des Absorptions-/Transmissionsmessens den oben bekannten, bereits beschriebenen negativen Auswirkungen der Messanordnung sowie der Sedimentierung auch hier einen großen apparativen Aufwand einer festen und wenigstens für einen Moment stationären Lagerung der Ampullen benötigt. Es werden mehrere Laserstrahlen oder Laserlichtquellen sowie ein Mehrpunktdetektor benötigt, was den apparativen Aufwand kostenträchtig macht. Durch die indirekte Konzentrationsbestimmung des Insulins über die Auswertung der Absorptionsbande des Wassers ist eine sehr hohe Messungenauigkeit vorhanden. Andere zugesetzte flüssige Bestandteile müssen zunächst aufwendig rechnerisch berücksichtigt werden.

Die Erfindung hat sich daher zur Aufgabe gesetzt, ein schnelles Verfahren zu schaffen, bei dem nach Möglichkeit auch eine lose auf einem Förderband oder einem Drehkarussell gelagerte Ampulle schnell gemessen werden kann, so dass ein Abfüllungsprozess nicht durch die Messung wesentlich verlangsamt wird.

Erfindungsgemäß wird dieses durch eine Vorrichtung mit den Merkmalen des Hauptanspruches gelöst. Grundlage des Verfahrens, wie es im nebengeordneten Anspruch 8 definiert ist, ist die laserinduzierte, zeitintegrierende Fluoreszenzspektroskopie (LIF(t)), bei der die Insuline direkt in der Karpule (Zylinderampulle) oder auch in anderen Behältnissen aus Glas über einen Lichtleiter optisch angeregt werden. Die Detektion der von den Insulinsuspensionen emittierten intrinsischen Fluoreszenzstrahlung erfolgt über einen zweiten Lichtleiter mittels eines Photomultipliers durch eine zeitaufgelöste, statistische Einzelphotonenzählung. Dabei wird die Anzahl der Fluoreszenzphotonen nach jedem Laseranregungspuls mit einer Dauer von typischerweise 1 ns (10⁻⁹s) in mindestens zwei geeignet zeitlich positionierten Erfassungsabschnitten geeigneter Dauer im Nanosekundenbereich aufintegriert und deren Verhältniswerte bestimmt.

Durch Konzentrationsmessung von Proben mit bekannter Insulinart und Konzentration kann dann unter Berücksichtigung des Sedimentationsgrades eine quantitative Analyse des Inhalts jedes einzelnen Glaskörpers nach dem Abfüllprozess in Echtzeit erfolgen.

An diesem Verfahren ist vorteilhaft, dass die intrinsische Fluoreszenz in der Insulinsuspension registriert wird und damit eine direkte Konzentrationsbestimmung des nachzuweisenden Präparates erfolgt, ohne dass eine direkte Durchstrahlungsmessung vorzunehmen ist, die die bekannten optischen Probleme aufgrund der Zylinderform der Behältnisse aufweist. Das Verfahren arbeitet zerstörungsfrei und nicht invasiv, so dass ein bereits abgefüllter Glasbehälter nicht geöffnet werden muss.

Weiter ist vorteilhaft, dass die Positionierung der Lichtleiter einseitig an den Karpulen oder anderen Glaskörpern ohne großen Justageaufwand erfolgt. Damit ist eine einfache Integration in bestehende Abfüllanlagen möglich.

Die zylindrische Geometrie der Karpulen oder anderer Glasgefäße bewirkt keinen störenden Einfluss auf das Messverfahren, da die Fluoreszenz isotrop in alle Raumrichtungen emittiert wird und somit durch die nahezu gleichmäßigen dicken Glasgefäße ohne Probleme nach außen emittiert wird. Mögliche Schwankungen in der Gesamtintensität des Fluoreszenzsignals haben durch die Auswertung der differentiellen Messgröße der zeitintegriert registrierten Intensitätswerte auch keinen störenden Einfluss auf die ermittelten Konzentrationswerte.

Auch bei bewegten und lose gehalterte Objekten unter realen Produktionsbedingungen ist durch die Zeitintegration eine sichere Datengewinnung gewährleistet.

Schließlich können verschiedene Insulinpräparate anhand der charakteristischen Fluoreszenzsignale identifiziert werden, so dass auch nachträglich, ohne direkt in den Abfüllprozess integriert zu sein, eine sichere Identifizierung von einmal abgefüllten Insulinen möglich ist.

Schließlich ist auch eine Bestimmung von Insulinkonzentrationen im produktionstechnisch relevanten Wertebereich oberhalb von 80 % für die unterschiedlichen Präparate ohne weiteres möglich.

Der unterschiedliche Sedimentationsgrad und das zugehörige Absetzverhalten der verschiedenen Insulinsuspensionen kann direkt bestimmt und damit auch die Güte eines Aufschlämmprozesses vor der Abfüllung sehr genau kontrolliert werden.

Weitere Merkmale und Vorteile der Erfindung ergeben sich aus nachfolgender Beschreibung eines bevorzugten Ausführungsbeispiels anhand der beigefügten Figuren. Dabei zeigt:

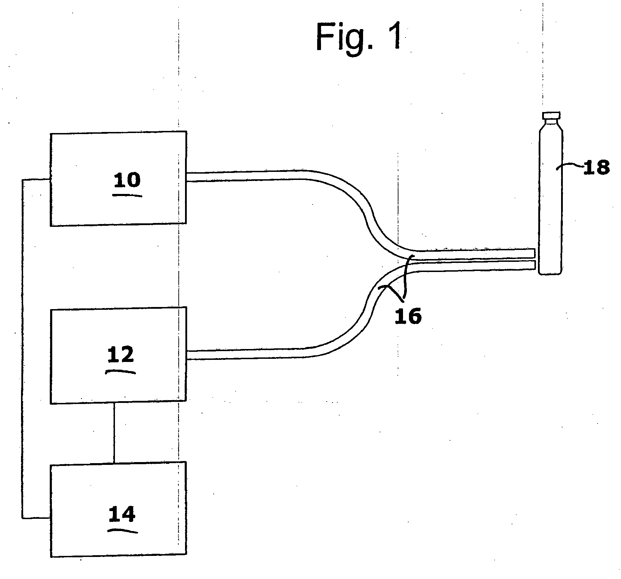

- Fig. 1: einen schematischen Aufbau der Messvorrichtung,

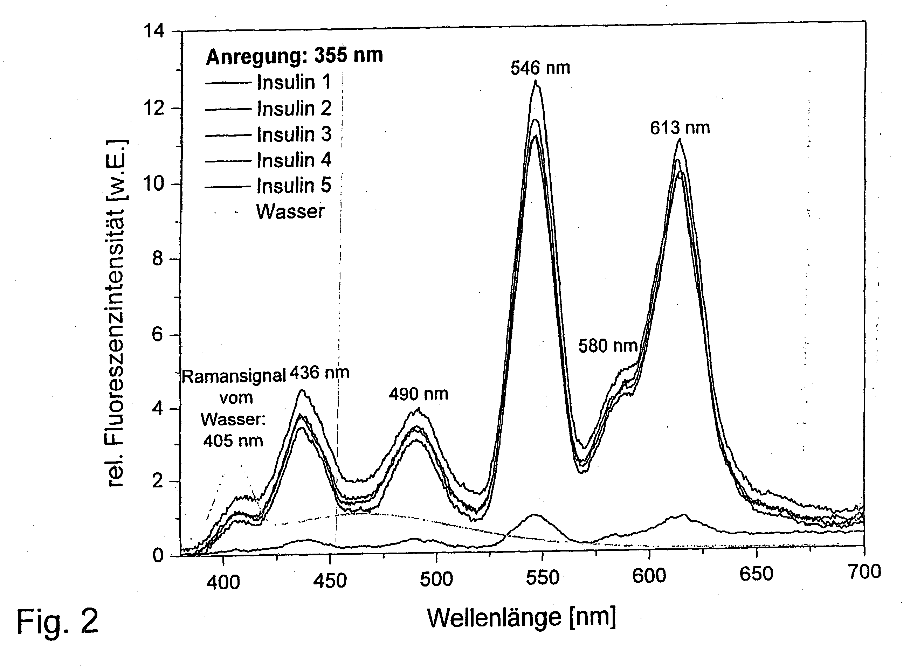

- Fig. 2: die Fluoreszenzspektren verschiedener Insuline nach der optischen Anregung bei einer Wellenlänge von 355 nm. Es zeigen sich charakteristische Peaks bei bestimmten Wellenlängen (407 nm, 436 nm, 490 nm, 546 nm, 580 nm und 613 nm), die zugehörige Intensitätsverteilung hängt von der Art der Insulinpräparate ab.

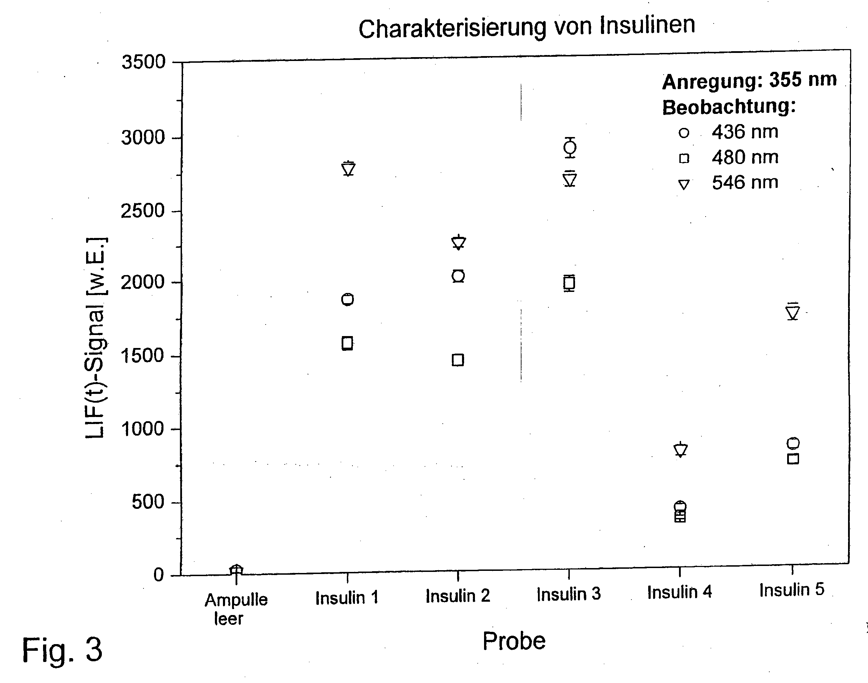

- Fig. 3: eine Charakterisierung von fünf Insulinen sowie einer leeren Ampulle bei drei unterschiedlichen Beobachungswellenlängen (436 nm, 480 nm und 546 nm) nach einer Fluoreszenzanregung bei 355 nm. Durch die angezeigten Fehlerwerte, die eng den Symbolen benachbart sind, ist klar, dass die Reproduzierbarkeit der Werte einfach gegeben ist.

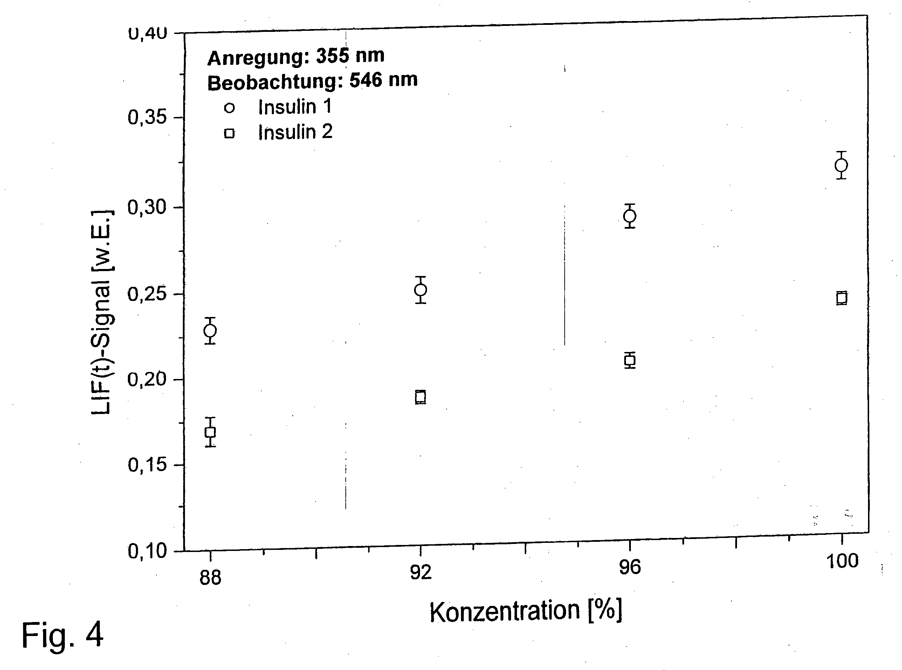

- Fig. 4: eine Konzentrationsbestimmung von Insulinen mit homogener Sedimentverteilung nach einer Anregung bei 355 nm und einer Fluoreszenzdetektion bei 546 nm. Es sind klare Differenzierungen, sowohl bei Insulin 1, wie auch bei Insulin 2 im Konzentrationsbereich oberhalb von 80 % erkennbar.

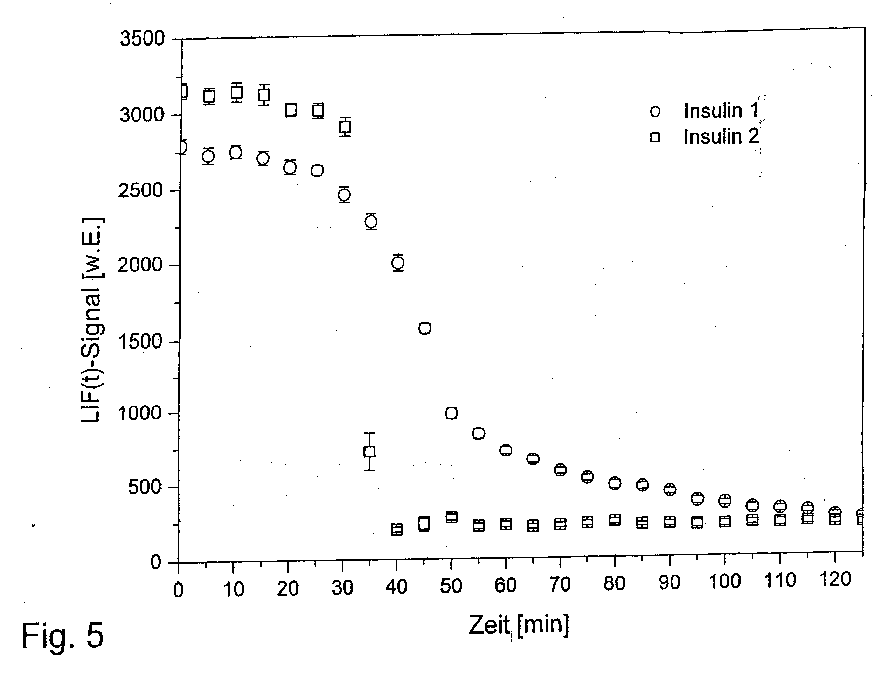

- Fig. 5: die Bestimmung des Sedimentierungsgrades bei Insulinen nach einer Anregung bei 355 nm und einer Fluoreszenzdetektion bei 546 nm, wobei für zwei verschiedene Insuline gezeigt ist, dass bei Insulin 1 im Bereich zwischen 30 und 60 min eine langsame Sedimentierung stattfindet, während für Insulin 2 im Bereich zwischen 30 und 40 min ein sprunghaftes Absetzverhalten auftritt.

Die in Fig. 1 dargestellte Vorrichtung zur Konzentrationsanalyse des Inhalts von medikamentgefüllten Glasbehältern 18 mit wenigstens einem Lichtleiter 16 weist eine gepulste Lichtquelle 10 mit - bevorzugt - einer typischen Pulsdauer von 1 ns zur Aufbringung von fluoreszenzinduzierendem Licht, bevorzugt bei einer Anregungswellenlänge von 355 nm durch den Lichtleiter auf einen Glasbehälter und eine Auswerteeinheit 14 auf, die Fluoreszenzlicht, das an einen Detektor 12, bevorzugt einen Photomultiplier, vom Ort der Bestrahlung geleitet wird, bei geeignet gewählten Beobachtungswellenlängen auswertet.

Ein zweiter Lichtleiter, der auf den Bestrahlungsort an der Außenseite der Glaskörper gerichtet ist, dient zur Weiterleitung des entstehenden Fluoreszenzlichts an den Detektor.

Der Detektor ist dabei bei einer festen Wellenlänge, die von der oder den Anregungswellenlängen typischerweise differiert zur Erfassung aller Photonen in wenigstens zwei zeitlich voneinander abweichenden Erfassungsfenstern (bei gleicher Beobachtungswellenlänge) eingerichtet.

Vorteilhaft ist, wenn ein erster Lichtleiter auf einen tiefstmöglichen Ort des Glasbehälters zur Bestrahlung mit UV-Laserlicht gerichtet ist, um lokale Sedimentationen zu erfassen.

Die Glasbehälter werden dabei in einer typischen Anwendung auf einem Förderband oder einem Drehkarussell gehalten sein, dass entlang einer ortsfesten Messstation transportiert, an der zwei Lichtleiter auf Höhe der Behälter dicht benachbart einander jeweils vertikal übereinander angeordnet, die vertikal stehenden Glaskörper unter gleichartigen Glaskrümmungsbedingungen anstrahlen, bzw. die hierdurch hervorgerufene Fluoreszenzstrahlung in der Karpule erfassen.

Die in Fig. 2 dargestellten Fluoreszenzspektren machen deutlich, dass verschiedene Insuline nach einer optischen Anregung bei 355 nm Fluoreszenzspektren mit charakteristischen Peaks bei bestimmten Wellenlängen (436 nm, 490 nm, 546 nm, 580 nm und 613 nm) aufweisen, deren Intensitätsverteilung stoffspezifisch ist. Die Bande bei 407 nm überlappt mit dem charakteristischen Signal der Ramanstreuung der Wassermoleküle bei 405 nm nach der Anregung bei 355 nm. Ähnliches lässt sich nach der Fluoreszenzanregung, zum Beispiel bei 266 nm, beobachten. Für die zeitintegrierende Fluoreszenzdetektion lassen sich deshalb stoffabhängig durchaus unterschiedliche Paarungen von Anregungs- und Beobachtungswellenlänge für einen optimalen, signifikanten Konzentrationsnachweis des jeweiligen Insulins festlegen.

Werden die laserinduzierten Fluoreszenzsignale nach der Anregung bei 355 nm für eine feste Beobachtungswellenlänge registriert, lassen sich, wie in Fig.3 gezeigt, unterschiedliche Insuline bei homogener Sedimentierung anhand ihres LIF(t) Signals charakteristisch nachweisen. Dieses kann insbesondere bei der Aufarbeitung von gefriergetrocknet gelagerten Insulinen vor der Abfüllung als Prüfkriterium für eine korrekte Chargenauswahl oder zur nachträglichen Produktidentifizierung nach dem Abfüllprozess eingesetzt werden.

Die Fluoreszenzsignale der einzelnen homogenisierten Insuline nach einer Anregung bei 355 nm hängen je nach Beobachtungswellenlänge ebenfalls charakteristisch von der Konzentration, insbesondere im Bereich oberhalb von 80 %, ab (siehe Fig. 4). Damit kann die produktionsbedingte Zugabe von Wasser und anderer Zuschlagsstoffe bei der Aufbereitung von gefriergetrocknet gelagerten Insulinen sehr signifikant, insbesondere aber nach der Abfüllung in jedem einzelnen Glasbehälter, kontrolliert werden.

In Fig. 5 ist exemplarisch gezeigt, dass verschiedene Insuline unterschiedliches Sedimentationsverhalten aufweisen. Anhand der zeitintegrierenden Fluoreszenzdetektion vorzugsweise mit einem am tiefstmöglichen Ort des zu befüllenden Glasbehälters positionierten Lichtleitersystems, kann bei bekanntem Präparat mit bekannter Insulinkonzentration geprüft werden, ob die abgefüllte Menge den richtigen Sedimentationsgrad aufweist. Hierzu wird stoffspezifisch die optimale Konfiguration aus Anregungs- und Beobachtungswellenlänge verwendet.

Die Vorrichtung zur Konzentrationsanalyse des Inhalts von medikamentgefüllten Glasbehältern mit wenigstens einem Lichtleiter kann als eine gepulste Lichtquelle zur Aufbringung von fluoreszenzinduzierendem Licht durch den Lichtleiter auf eine Probe auch eine andere als eine Laserlichtquelle verwenden. Die Auswerteeinheit kann auch durch andere optische Systeme als Lichtleiter mit dem induzierten Fluoreszenzlicht versorgt werden.

Ein zweiter Lichtleiter, der auf den Bestrahlungsort an der Außenseite des Glasbehälterkörpers gerichtet ist, ist jedoch aufgrund der Fähigkeit einen wesentlichen Raumwinkel des abgestrahlten Fluoreszenzlichts reproduzierbar aufzufangen, zur Weiterleitung des Fluoreszenzlichts an den Detektor sehr geeignet.

Durch eine Erfassung der Detektorsignale in zwei zeitlich voneinander abweichenden Erfassungsfenstern in der rechnergestützten Auswerteeinheit 14 bei gleicher Beobachtungswellenlänge kann medikamentspezifisch auf ein bestimmtes Abklingverhalten der Fluoreszenzstrahlung "eingestellt" werden.

Geometrisch wird vorgeschlagen, einen ersten Lichtleiter auf einen tiefstmöglichen Ort eines stehend angeordneten, zylindrischen Glasbehälters zur Bestrahlung mit UV-Laserlicht gerichtet ist, um lokale Sedimentationen zu erfassen. Weiter wird bevorzugt, dass die Glaskörper auf einem Förderband oder Drehkarussell gehalten sind, das entlang einer ortsfesten Messstation transportiert wird, an der zwei Lichtleiter auf Höhe der Glaskörper dicht benachbart, einander jeweils vertikal übereinander angeordnet, die vertikal stehenden Glaskörper unter gleichartigen Krümmungsbedingungen anstrahlen bzw. die hierdurch hervorgerufene Fluoreszenzstrahlung in dem Behälter erfassen.

Das Verfahren zur Konzentrationsanalyse des Inhalts von medikamentgefüllten Glasbehältern beinhaltet damit die Schritte :
- optisches Anregen des Inhalts in einem Glaskörper mit einer gepulsten Lichtquelle,
- Erfassen der intrinsinschen Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer,
- Bestimmen eines Verhältniswerts der Photonenzählung in jedem Erfassungsabschnitt,
wobei das Verfahren zu einer identifizierenden Prüfung von Proben mit aufgearbeitetem Medikament in bekannter Abfüllkonzentration und Sedimentation, die weiteren Schritte :
- in wenigstens einem vorgewählten Zeitabstand, vor oder nach Abfüllung ein optisches Anregen des Inhalts eines Glaskörpers mit einer gepulsten Lichtquelle an einem Ort homogener Sedimentation oder ohne Sedimentation,
- und eine Bestätigung der Probe (Freigabe), wenn die intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament in der bekannten Abfüllkonzentration, nach vorheriger Eichung, einen Sollfluoreszenzwert (LIFₛₒₗₗ (t)) aus beiden Erfassungsabschnitten erreicht, umfasst.

Falls eine Konzentrationsanalyse von Proben mit bekanntem Medikament stattfinden soll, hätte:
- in wenigstens einem vorgewählten Zeitabstand zur Abfüllung ein optisches Anregen des Inhalts in einem Glaskörper mit einer gepulsten Lichtquelle an einem Ort homogener Sedimentation zu erfolgen, und
- wäre weiter die intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament zu vergleichen, um nach vorheriger Eichung eine Abfüllkonzentration zu bestimmen und damit ein Maß für die Güte eines vorherigen Aufarbeitungsschrittes zu erreichen.

Falls jedoch eine Konzentrationsanalyse von Proben mit bekanntem Medikament und bekannter Abfüllkonzentration erfolgt, hätte:
- in wenigstens einem vorgewählten Zeitabstand zur Abfüllung ein optisches Anregen des Inhalts in einem Glaskörper mit einer gepulsten Lichtquelle an einem Ort ohne oder bei homogener Sedimentation zu erfolgen, und
- wäre die intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament in der bekannten Abfüllkonzentration zu vergleichen, um so nach vorheriger Eichung einen Sedimentationsgrad zu bestimmen und damit ein Maß für die Güte eines vorherigen Aufschlämmschrittes zu erreichen.

## Patentansprüche

1. Verfahren zur Konzentrationsanalyse des Inhalts von mit Medikament mit flüssigen Bestandteilen oder in Form einer sedimentierenden Suspension abgefüllten Glasbehältern, **gekennzeichnet durch** die Schritte :
- optisches Anregen des Inhalts in einem Glaskörper mit einer gepulsten Lichtquelle,
- Erfassen der intrinsinschen Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer,
- Bestimmen eines Verhältniswerts der Photonenzählung in jedem Erfassungsabschnitt.

2. Verfahren nach Anspruch 1 zur identifizierenden Prüfung von Proben mit aufgearbeitetem Medikament in bekannter Abfüllkonzentration und Sedimentation, **dadurch gekennzeichnet, dass** :
- in wenigstens einem vorgewählten Zeitabstand vor oder nach Abfüllung ein optisches Anregen des Inhalts eines Glaskörpers mit einer gepulsten Lichtquelle an einem Ort homogener Sedimentation oder ohne Sedimentation erfolgt,
- die intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament in der bekannten Abfüllkonzentration verglichen wird und, nach vorheriger Eichung, das Erreichen eines Sollfluoreszenzwertes (LIFsₒₗₗ (t)) aus beiden Erfassungsabschnitten bestätigt wird.

3. Verfahren nach Anspruch 1 zur Konzentrationsanalyse von Proben mit bekanntem Medikament, **dadurch gekennzeichnet dass** :
- in wenigstens einem vorgewählten Zeitabstand zur Abfüllung ein optisches Anregen des Inhalts in einem Glaskörper mit einer gepulsten Lichtquelle an einem Ort homogener Sedimentation erfolgt,
- die intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament verglichen wird und nach vorheriger Eichung eine Abfüllkonzentration bestimmt und damit ein Maß für die Güte eines vorherigen Aufarbeitungsschrittes erreicht wird.

4. Verfahren nach Anspruch 1 zur Konzentrationsanalyse von Proben mit bekanntem Medikament und bekannter Abfülkonzentration, **dadurch gekennzeichnet dass** :
- in wenigstens einem vorgewählten Zeitabstand zur Abfüllung ein optisches Anregen des Inhalts in einem Glaskörper mit einer gepulsten Lichtquelle an einem Ort ohne oder bei homogener Sedimentation erfolgt,
- die intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament in der bekannten Abfüllkonzentration verglichen wird und nach vorheriger Eichung ein Sedimentationsgrad bestimmt und damit ein Maß für die Güte eines vorherigen Aufschlämmschrittes erreicht wird.

5. Vorrichtung zur Konzentrationsanalyse des Inhalts von mit Medikament mit flüssigen Bestandteilen oder in Form einer sedimentierenden Suspension abgefüllten Glasbehältern mit
wenigstens einem Lichtleiter,
einer gepulste Lichtquelle zur Aufbringung von fluoreszenzinduzierendem Licht durch den Lichtleiter auf eine Probe, und
einer Auswerteeinheit, die das induzierte Fluoreszeuzlicht, das an einen Detektor vom Ort der Bestrahlung geleitet ist, auswertet, **gekennzeichnet durch**
eine Einrichtung zum Vergleich der intrinsische Fluoreszenzstrahlung mit zeitintegrierender Fluoreszenzspektroskopie (LIF(t)) in mindestens zwei geeignet zeitlich positionierten Erfassungszeitabschnitten vorbestimmter Dauer mit einem erwarteten Fluoreszenzwert für das bekannte Medikament in der bekannten Abfüllkonzentration, die nach vorheriger Eichung das Erreichen eines Sollfluoreszenzwertes (LIFₛₒₗₗ (t)) aus beiden Erfassungsabschnitten eine Bestgtigung ausgibt.

6. Vorrichtung zur Konzentrationsanalyse nach Anspruch 5, **dadurch gekennzeichnet, dass** die gepulste Lichtquelle ein gepulster Laser ist.

7. Vorrichtung zur Konzentrationsanalyse nach Anspruch 5 oder 6, **dadurch gekennzeichnet, dass** ein zweiter Lichtleiter auf den Bestrahlungsort an der Außenseite des Glasbehälterkörpers, zur Weiterleitung des Fluoreszenzlichts an den Detektor, gerichtet ist.

8. Vorrichtung zur Konzentrationsanalyse nach einem der vorangehenden Ansprüche, **dadurch gekennzeichnet, dass** der Detektor ein Photomultiplier ist.

9. Vorrichtung zur Konzentrationsanalyse nach einem der vorhergehenden Ansprüche, **dadurch gekennzeichnet, dass** eine Auswerteeinheit zur Erfassung der Detektorsignale in zwei zeitlich voneinander abweichenden Erfassungsfenstern bei gleicher Beobachtungswellenlänge vorgesehen ist.

10. Vorrichtung zur Konzentrationsanalyse nach einem der vorhergehenden Ansprüche, **dadurch gekennzeichnet, dass** ein erster Lichtleiter auf einen tiefstmöglichen Ort eines stehend angeordneten zylindrischen Glasbehälters zur Bestrahlung mit UV-Laserlicht gerichtet ist, um lokale Sedimentationen zu erfassen.

11. Vorrichtung zur Konzentrationsanalyse nach einem der vorhergehenden Ansprüche, **dadurch gekennzeichnet, dass** die Glaskörper auf einem Förderband oder Drehkarussell gehalten sind, das entlang einer ortsfesten Messstation transportiert, an der zwei Lichtleiter auf Höhe der Glaskörper dicht benachbart, einander jeweils vertikal übereinander angeordnet, die vertikal stehenden Glaskörper unter gleichartigen Krümmungsbedingungen anstrahlen bzw. die hierdurch hervorgerufene Fluoreszenzstrahlung in dem Behälter erfassen.

## Claims

1. A method for the concentration analysis of the content of glass containers filled with medicine having liquid components or in the form of a sedimenting suspension, **characterised by** the steps:
- optically stimulating the content in a glass body using a pulsed light source;
- detecting the intrinsic fluorescent radiation using time-integrating fluorescence spectroscopy (LIF(t)) in at least two detection time periods of a predefined duration having suitable time positioning; and
- determining a ratio of the photon count after each detection period.

2. A method in accordance with claim 1 for the identifying examination of samples with processed medicine in a known filling concentration and sedimentation, **characterised in that**:
- an optical stimulation of the content of a glass body using a pulsed light source at a location of homogeneous sedimentation or without sedimentation takes place at at least one preselected time interval before or after the filling; and
- the intrinsic fluorescent radiation using time-integrating fluorescence spectroscopy (LIF(t)) in at least two detection time periods of a predefined duration having suitable time positioning is compared with an expected fluorescence value for the known medicine in the known filling concentration and the reaching of a desired fluorescence value (LIF_{des}(t)) from both detection steps is confirmed after a prior calibration.

3. A method in accordance with claim 1 for the concentration analysis of samples with a known medicine, **characterised in that**
- an optical stimulation of the content in a glass body takes place using a pulsed light source at a location of homogeneous sedimentation at at least one preselected time interval from the filling; and
- the intrinsic fluorescent radiation using time-integrating fluorescence spectroscopy (LIF(t)) in at least two detection time periods of a predefined duration having suitable time positioning is compared with an expected fluorescence value for the known medicine and a filling concentration is determined after a prior calibration and thus a measure for the quality of a previous processing step is achieved.

4. A method in accordance with claim 1 for the concentration analysis of samples with a known medicine and a known filling concentration, **characterised in that**
- an optical stimulation of the content in a glass body takes place using a pulsed light source at a location without or with homogeneous sedimentation at at least one preselected time interval from the filling; and
- the intrinsic fluorescent radiation using time-integrating fluorescence spectroscopy (LIF(t)) in at least two detection time periods of a predefined duration having suitable time positioning is compared with an expected fluorescence value for the known medicine in the known filling concentration and a degree of sedimentation is determined after a prior calibration and thus a measure for the quality of a previous suspension step is achieved.

5. An apparatus for the concentration analysis of the content of glass containers filled with medicine having liquid components or in the form of a sedimenting suspension having at least one optical fibre;
having a pulsed light source for applying fluorescence-inducing light through the optical fibre onto a sample; and
having an evaluation unit which evaluates the induced fluorescent light which is conducted from the location of the radiation to a detector, **characterised in that**
a device for comparing the intrinsic fluorescent radiation using time-integrating fluorescence spectroscopy (LIF(t)) in at least two detection time periods of a predefined duration having suitable time positioning is compared with an expected fluorescence value for the known medicine in the known filling concentration which, after prior calibration, outputs a confirmation on reaching a desired fluorescent value (LIF_{desired}(t)) from both detection periods.

6. An apparatus for concentration analysis in accordance with claim 5, **characterised in that** the pulsed light source is a pulsed laser.

7. An apparatus for concentration analysis in accordance with claim 5 or claim 6, **characterised in that** a second optical fibre is directed to the irradiation location at the outer side of the glass container body for forwarding the fluorescent light to the detector.

8. An apparatus for concentration analysis in accordance with one of the preceding claims, **characterised in that** the detector is a photomultiplier.

9. An apparatus for concentration analysis in accordance with one of the preceding claims, **characterised in that** an evaluation unit is provided for detecting the detector signals in two detection windows differing from one another in time at the same observation wavelength.

10. An apparatus for concentration analysis in accordance with one of the preceding claims, **characterised in that** a first optical fibre is directed to a location, which is as low as possible, of a cylindrical glass container arranged in an upright position for irradiation with UV laser light to detect local sedimentation.

11. An apparatus for concentration analysis in accordance with one of the preceding claims, **characterised in that** the glass bodies are held on a conveyor belt or a rotating carousel which transports along a spatially fixed measurement station, at which two optical fibres which are arranged closely adjacent each vertically above one another irradiate the vertically upright glass bodies under similar curvature conditions or detect the fluorescent radiation in the container caused hereby.

## Revendications

1. Procédé d'analyse de la concentration du contenu de récipients en verre remplis de médicament avec des composants liquides ou sous forme d'une suspension sédimentant, **caractérisé par** les étapes :
- excitation optique du contenu dans un corps en verre avec une source lumineuse pulsée,
- détection du rayonnement de fluorescence intrinsèque par spectroscopie de fluorescence intégrée dans le temps (LIF(t)) dans au moins deux périodes de détection de durée prédéterminée placées de manière appropriée dans le temps,
- détermination d'un rapport du comptage de photons dans chaque période de détection.

2. Procédé selon la revendication 1 pour le contrôle d'identification d'échantillons avec un médicament préparé présentant une concentration de remplissage et une sédimentation connues, **caractérisé en ce que** :
- à au moins un intervalle présélectionné avant ou après le remplissage, une excitation optique du contenu d'un corps en verre est effectuée avec une source lumineuse pulsée à un point de sédimentation homogène ou sans sédimentation,
- le rayonnement de fluorescence intrinsèque par spectroscopie de fluorescence intégrée dans le temps (LIF(t)) dans au moins deux périodes de détection de durée prédéterminée placées de manière appropriée dans le temps est comparé avec une valeur de fluorescence attendue pour le médicament connu présentant la concentration de remplissage connue et, après un calibrage préalable, l'obtention d'une valeur de fluorescence de consigne (LIF_{ref}(t)) est confirmée à partir des deux périodes de détection.

3. Procédé selon la revendication 1 destiné à l'analyse de la concentration d'échantillons comprenant un médicament connu, **caractérisé en ce que** :
- à au moins un intervalle présélectionné par rapport au remplissage, une excitation optique du contenu dans un corps en verre est effectuée avec une source lumineuse pulsée à un point de sédimentation homogène,
- le rayonnement de fluorescence intrinsèque par spectroscopie de fluorescence intégrée dans le temps (LIF(t)) dans au moins deux périodes de détection de durée prédéterminée placées de manière appropriée dans le temps est comparé avec une valeur de fluorescence attendue pour le médicament connu et, après un calibrage préalable, une concentration de remplissage est déterminée et par conséquent on obtient une mesure de la qualité d'une étape de préparation précédente.

4. Procédé selon la revendication 1 destiné à l'analyse de la concentration d'échantillons comprenant un médicament connu et avec une concentration de remplissage connue, **caractérisé en ce que** :
- à au moins un intervalle présélectionné par rapport au remplissage, une excitation optique du contenu dans un corps en verre est effectuée avec une source lumineuse pulsée à un point sans sédimentation ou de sédimentation homogène,
- le rayonnement de fluorescence intrinsèque par spectroscopie de fluorescence intégrée dans le temps (LIF(t)) dans au moins deux périodes de détection de durée prédéterminée placées de manière appropriée dans le temps est comparé avec une valeur de fluorescence attendue pour le médicament connu dans la concentration de remplissage connue et, après un calibrage préalable, un degré de sédimentation est déterminé et par conséquent on obtient une mesure de la qualité d'une étape de suspension précédente.

5. Dispositif d'analyse de la concentration du contenu de récipients en verre remplis de médicament avec des composants liquides ou sous forme d'une suspension sédimentant comprenant
au moins un guide d'ondes optiques,
une source lumineuse pulsée pour appliquer une lumière induisant une fluorescence sur un échantillon à travers le guide d'ondes optiques, et
une unité d'évaluation qui évalue la lumière fluorescente induite qui est guidée du point de rayonnement à un détecteur, **caractérisé par**
un dispositif pour la comparaison du rayonnement de fluorescence intrinsèque par spectroscopie de fluorescence intégrée dans le temps (LIF(t)) dans au moins deux périodes de détection de durée prédéterminée placées de manière appropriée dans le temps avec une valeur de fluorescence attendue pour le médicament connu dans la concentration de remplissage connue, qui, après un calibrage préalable, sort la confirmation de l'obtention d'une valeur de fluorescence de consigne (LIF_{réf} (t)) à partir des deux périodes de détection.

6. Dispositif d'analyse de la concentration selon la revendication 5, **caractérisé en ce que** la source lumineuse pulsée est un laser à impulsions.

7. Dispositif d'analyse de la concentration selon la revendication 5 ou 6, **caractérisé en ce qu'**un second guide d'ondes optiques est dirigé sur le point d'irradiation sur le côté extérieur du corps de récipient en verre pour la transmission de la lumière fluorescente au détecteur.

8. Dispositif d'analyse de la concentration selon l'une des revendications précédentes, **caractérisé en ce que** le détecteur est un photomultiplicateur.

9. Dispositif d'analyse de la concentration selon l'une des revendications précédentes, **caractérisé en ce qu'**une unité d'évaluation est prévue pour la détection des signaux de détecteur dans deux fenêtres de détection différant l'une de l'autre dans le temps avec une même longueur d'ondes d'observation.

10. Dispositif d'analyse de la concentration selon l'une des revendications précédentes, **caractérisé en ce qu'**un premier guide d'ondes optiques est dirigé sur un point le plus bas possible d'un récipient en verre cylindrique disposé debout pour l'irradiation avec de la lumière laser UV, pour détecter les sédimentations locales.

11. Dispositif d'analyse de la concentration selon l'une des revendications précédentes, **caractérisé en ce que** les corps en verre sont maintenus sur une bande transporteuse ou un carrousel rotatif, qui effectue le transport le long d'une station de mesure stationnaire, dans laquelle deux guides d'ondes optiques disposés à hauteur des corps en verre à proximité étroite l'un de l'autre, respectivement verticalement l'un au-dessus de l'autre, irradient les corps en verre posés verticalement dans des conditions de courbure homogènes ou détectent le rayonnement de fluorescence ainsi provoqué dans le récipient.
